# EUROPEAN PATENT SPECIFICATION

(11) **EP 0 334 377 B1**
(45) Date of publication and mention of the grant of the patent: **19.05.1993**
(21) Application number: 89105290.4
(22) Date of filing: 23.03.1989
(51) Int. Cl.: C09J 123/00, C09J 123/02, C08F 4/00, C08F 279/00

(54) **Adhesive compositions**
Klebstoffzusammensetzungen
Compositions adhésives

(30) Priority: 25.03.1988 IT 1995288
(43) Date of publication of application: 27.09.1989
(73) Proprietor: MINISTERO DELL' UNIVERSITA' E DELLA RICERCA SCIENTIFICA E TECNOLOGICA, 00196 Roma (IT)
(72) Inventor: Morini, Giampiero, I-27058 Voghera Pavia (IT); Garbassi, Fabio, I-28100 Novara (IT); Citterio, Attilio, I-20132 Milan (IT)
(74) Representative: Barz, Peter, Dr.

(56) References cited:
- US-A- 3 446 752
- US-A- 4 081 308
- DATABASE CHEMICAL ABSTRACTS (HOST STN), vol. 85, no. 14, 1976, abstract 94755e, Columbus, Ohio, US

## Description

The present invention relates to an adhesive composition and in particular to a new redox system of radicalic polymerization initiation particularly suitable for structural adhesives of said acrylic type.

The use of structural adhesives has substantially increased lately, chiefly in the aerospace and automotive fields, with the consequent development of new high-performance adhesive systems.

The use of structural adhesives in such fields has facilitated the replacement of the conventional metal structural materials with polymeric structural materials.

Moreover, the finding and development of the class of structural acrylic adhesives has made possible their application also on non-pretreated surfaces and even on not perfectly cleaned surfaces, without exceedingly affecting the adhesive performance.

Contrary to the customary epoxide bicomponent adhesive systems which generally react slowly at room temperature and moreover require a careful premixing of the components and a careful preparation of the surfaces as well, the bicomponent structural acrylic adhesives contain catalysts and adhesion promoters that make possible a quick hardening at room temperature and do not require any premixing of the components, nor any very careful preparation of the surfaces to be adhered.

Many systems of polymerization initiation have been developped for the acrylic adhesive compositions.

For instance, catalytic systems are known to the prior art, comprising the combination of a tertiary amine and a peroxide (US-A-3 333 025); aldehyde/amine condensation products in combination with metal chelates (US-A-3 591 438); amines with benzoyl peroxide (US-A-3 725 504 and 3 832 274); a redox system with methylethyl-ketone hydroperoxide and cobalt naphthenate (US-A-3 838 093); the combination of amines, salts of transition metals, aldehyde/amine condensation products and peroxides (US-A-3 890 407): amines and peroxides in combination with oxidizable metal ions (US-A-3 994 764); saccharin or copper saccharinate and para-toluene sulfonic acid (US-A-4 052 244); peroxides and aldehyde/amine condensation products with non-transition metals comprising lead, zinc, tin, calcium, strontium, barium and cadmium (US-A-4 230 834); and a peroxidic initiator with a strong acid and ferrocene (US-A-3 855 040).

None of these adhesive compositions, however, is free from drawbacks, such as, for instance, poor storage stability, long setting time, and so on.

In order to overcome these drawbacks, in US-A-4 348 503 and 4 429 088, bicomponent adhesive compositions were proposed constituted by a first component (A) containing hydroxyethyl methacrylate, a urethane polymer ending with methacrylic residues, ferric sulphate, a dicarboxylic acid capable of giving cyclic tautomeriem and a perester, and a second component (B) containing an activator constituted by an aldehyde/amine condensation mixture.

Even in these cases, however, the adhesive compositions are not free from drawbacks due, for instance, to their storage instability or to the poor versatility of the compositions: as a matter of fact, only acrylic esters are used, while acrylic acid and methacrylic acid, generally used in the acrylic adhesive compositions as an adhesion promoter, are not used.

In accordance with the present invention, it has now been discovered that the above mentioned drawbacks may be overcome or eliminated by using a particular redox polymerization system consisting of an oxaziridine and of a reducing system.

In its broadest aspect, the present invention relates to bicomponent adhesive compositions, having short setting time, high mechanical performance, and high storage stability, comprising:
- an adhesive base consisting or consisting essentially of a solution of an elastomer in one or more polymerizable vinyl monomers;
- a component selected from a dicarboxylic acid containing from 3 to 18 carbon atoms, a salt of a transition metal or a mixtures thereof;
- an oxaziridine having the formula: 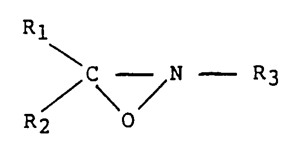 wherein R₁, R₂, and R₃, either the same or different, may be a hydrogen atom, a hydrocarbon radical having a number of carbon atoms between 1 and 20 and selected from the group consisting of an alkyl, isoalkyl, alkenyl, alkylene, cyclo-alkyl, cyclo-alkylene, arylene, aryl, alkyl-aryl, alkyl-arylene, aryl-alkyl, aryl-alkylene, alkyl-cyclo-alkyl and alkyl-cyclo-alkylene radicals, and
- an organic or inorganic reducing agent, defined as a polymerization activator.

The vinyl monomers which may be used in the adhesive compositions of the present invention comprise the acrylic monomers and their mixtures, for instance methyl methacrylate, ethyl methacrylate, acrylonitrile, methacrylonitrile, methyl acrylate, ethyl acrylate, n-butyl methacrylate, cyclohexyl methacrylate, n-hexyl methacrylate, 2-ethylhexyl methacrylate, lauryl methacrylate, n-butyl acrylate, cyclohexyl acrylate, n-hexyl acrylate, 2-ethylhexyl acrylate, lauryl acrylate, methacrylic acid, acrylic acid, glycidyl methacrylate, itaconic acid, acrylic or methacrylic esters of diols, of triols, or of polyols, acrylamide, methacrylamide, the halogenated monomers, for instance vinylidene chloride, chlorostyrenes, 2,3-dichloro-1,3-butadiene, 2-chloro-1,3-butadiene, styrene, and mono- and polyalkyl-styrenes, for instance methyl styrenes, dimethylstyrenes, ethylstyrenes or terbutylstyrenes.

Acrylic monomers are preferred, and particularly alkyl and cycloalkyl acrylates and methacrylates, ethylene-glycol diacrylate and dimethacrylate, acrylic and methacrylic acid.

Any elastomer known to the prior art, and soluble in the polymerizable vinyl monomer or monomers, may be used in the adhesive compositions of the present invention.

Examples of possible elastomers are chlorinated polyethylene, polybutadiene, butadiene/acrylonitrile copolymers, polyacrylates, polyisoprene, polychloroprene, polyurethanes, and polyfluorinated elastomers.

A preferred elastomer is the butadiene/acrylonitrile copolymer traded by ENICHEM under the trade mark ELAPRIM®.

The relative ratio between the elastomer and the polymerizable vinyl monomer may vary over a wide range, and generally the ratio is between 100 and 2 000 parts by weight of the monomer per 100 parts of the elastomer. A range from 100 to 500 parts by weight of the monomer per 100 parts of the elastomer is preferred.

Any dicarboxylic acid having from 1 to 18 carbon atoms and capable of coordinating metal ions may be used in the compositions of the present invention.Typical but non-limitative examples of suitable acids are maleic acid, malic acid, salicylic acid, itaconic acid, phthalic acid and mixtures therof. Maleic acid is preferred.

The amount of the dicarboxylic acid to be used is not critical and generally may range between 0.5 and 10% parts by weight per 100 parts of solution.
Any salt of a transition metal soluble in the solution of the elastomer in the polymerizable vinyl monomer or monomers may be used. Salts containing iron, copper, cobalt, nickel, manganese, vanadium in an oxidized state of higher valency are preferred. Examples of salts of a transition metal which may be used are: ferric trichloride, ferric sulphate, iron (III) saccharinate, iron (III) octoate, iron (III) naphthenate, copper (II) saccharinate, cobalt naphthenate, and vanadium acetylacetonate.

The amount of the metal transition salt which may be used in the solution of the polymer in the polymerizable vinyl monomer or monomers, is not critical, although amounts equal to or lower than 0.5 parts by weight per 100 parts of the solution are generally used.

A stabilizing agent selected from quinones and hydroquinones, for instance, hydroquinone, hydroquinone monomethylether, anthraquinone, and 2,6-di-tert-butyl-p-methylphenol (BHT), in amounts ranging from 0.1 to 2 parts by weight per 100 parts of solution may be further added to the solution. 2,6-di-tert-butyl-methylphenol (BHT), is the preferred stabilizing agent.

The agent generating free radicals is an oxaziridine having the formula: 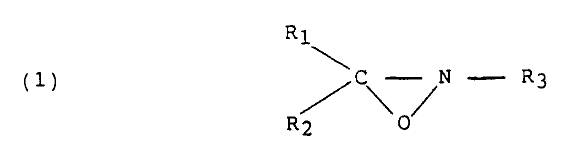
wherein R₁, R₂, and R₃, either the same or different, may be a hydrogen atom, an aliphatic, cycloalkylic, aromatic radical containing from 1 to 20 carbon atoms, such as for instance alkyl, alkenyl, aryl, cycloalkyl, alkylaryl, arylalkyl, alkylcycloalkyl and cycloalkyl-alkyl radicals; R₁ and R₂ and R₁ or R₂ and R₃ may, taken together, form a cycloalkyl ring either as a cycloalkylene or a heterocyclic ring containing the nitrogen atom as hetero-atom.

Moreover, two radicals R₃ and two or four radicals R₁ and R₂ may be taken together to form a polyoxaziridine having the formula 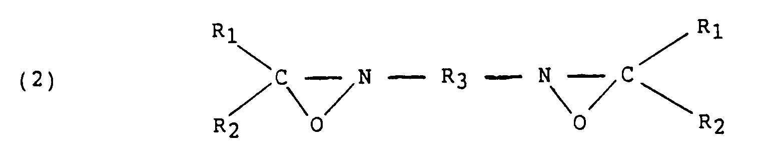
or 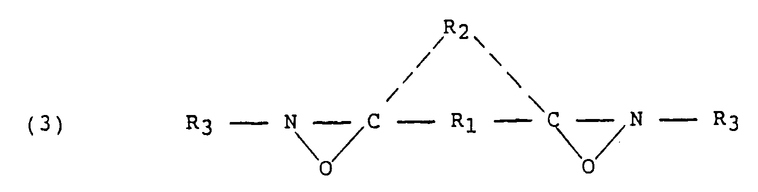
wherein R₁, R₂ and R₃ may be of the type specified in formula (1), but bivalent where indicated in formulas (2) and (3).

Compounds containing up to 5 oxiziridine rings bound by bivalent radicals are within the scope of this invention.

Examples of radicals R₁, R₂ and R₃ are the following: methyl, ethyl, n-propyl, isopropyl, n-butyl, isobutyl, sec-butyl, ter-butyl, n-amyl, iso-amyl, sec-amyl, neopentyl, trimethylethyl, n-octyl, 2-ethyhexyl, isooctyl, n-nonyl, isononyl, n-decyl, n-dodecyl, n-undecyl, n-tetradecyl, n-octadecyl, n-eicosyl; allyl, butenyl, hexenyl, linolenyl, oleyl and octenyl; cyclopropyl, cyclobutyl, cyclopentyl, cyclohexyl, cycloheptyl, cyclooctyl, cyclododecyl, methylcyclohexyl, methylcyclopentyl, ethylcyclohexyl, diethylcyclobutyl, cyclohexylcyclohexyl, tetrahydronaphthyl; benzyl, phenyl, α-phenylethyl, β-phenylethyl, xylyl, toluyl, ethylbenzyl, ethylphenyl, naphthyl, phenanthryl, bisphenyl, chrysenyl, fluorenyl, α- and β-naphthylethyl; acyl such as benzoyl, acetyl, methacryloyl, acryloyl; and, when R₁ and R₂ and R₁ and/or R₂ and/or R₃ are taken together, tetramethylene, pentamethylene and hexamethylene; phenylene, cyclohexylene, 1,4-dimethylene phenylene.

The oxaziridines are easily prepared according to known methods. A suitable method consists in oxidizing the corresponding imine by means of a peracid, such as peracetic acid or perbenzoic acid, or by means of hydrogen peroxide. reacted with chloramine or with hydroxylamino-O-sulfonic acid and their N-alkyl or N-aryl derivatives in the presence of alkalis.

These reactions are illustrated by the following equations:

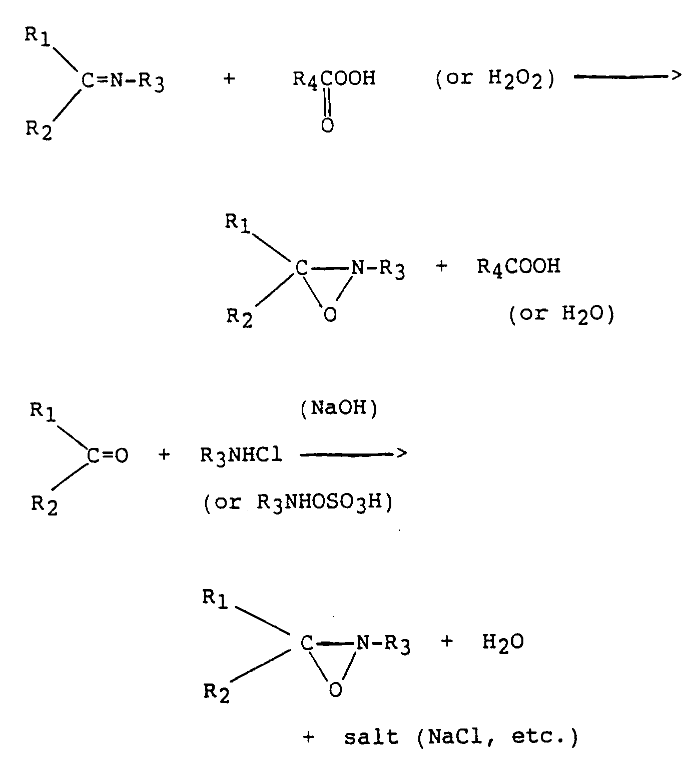

In the above formulae, R₁, R₂ and R₃ have the meanings defined above and R₄ represents the radical of the peracid and may be any one of the radicals R₁, R₂ and R₃ as defined above.

Examples of oxaziridines which can be used as generators of free radicals in the compositions of the present invention include the following:

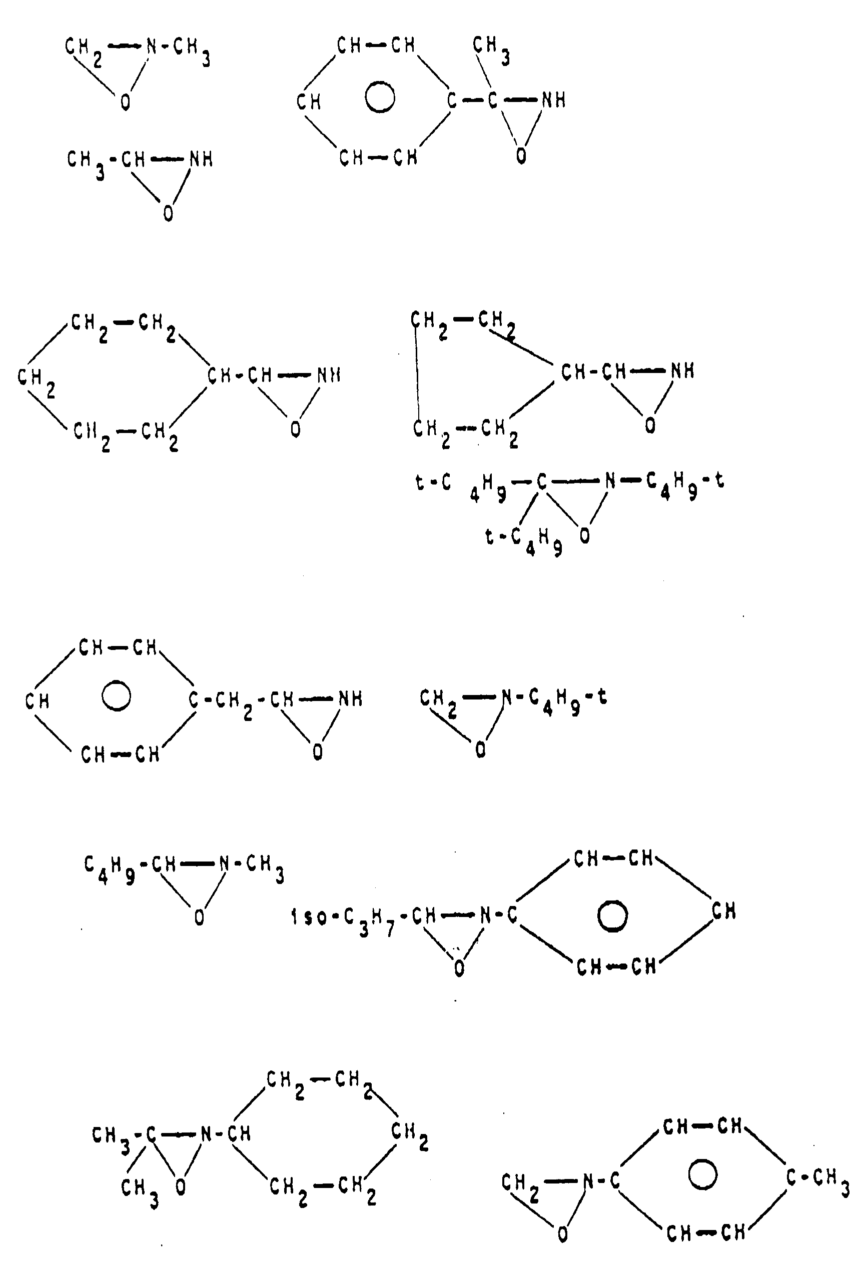

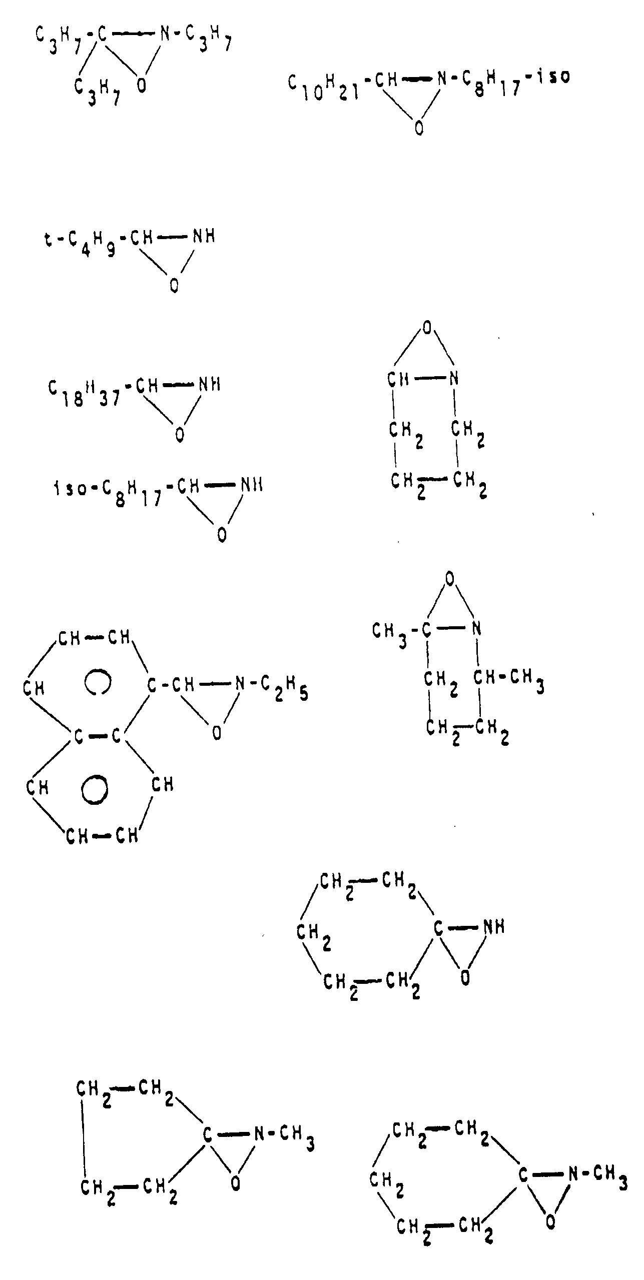

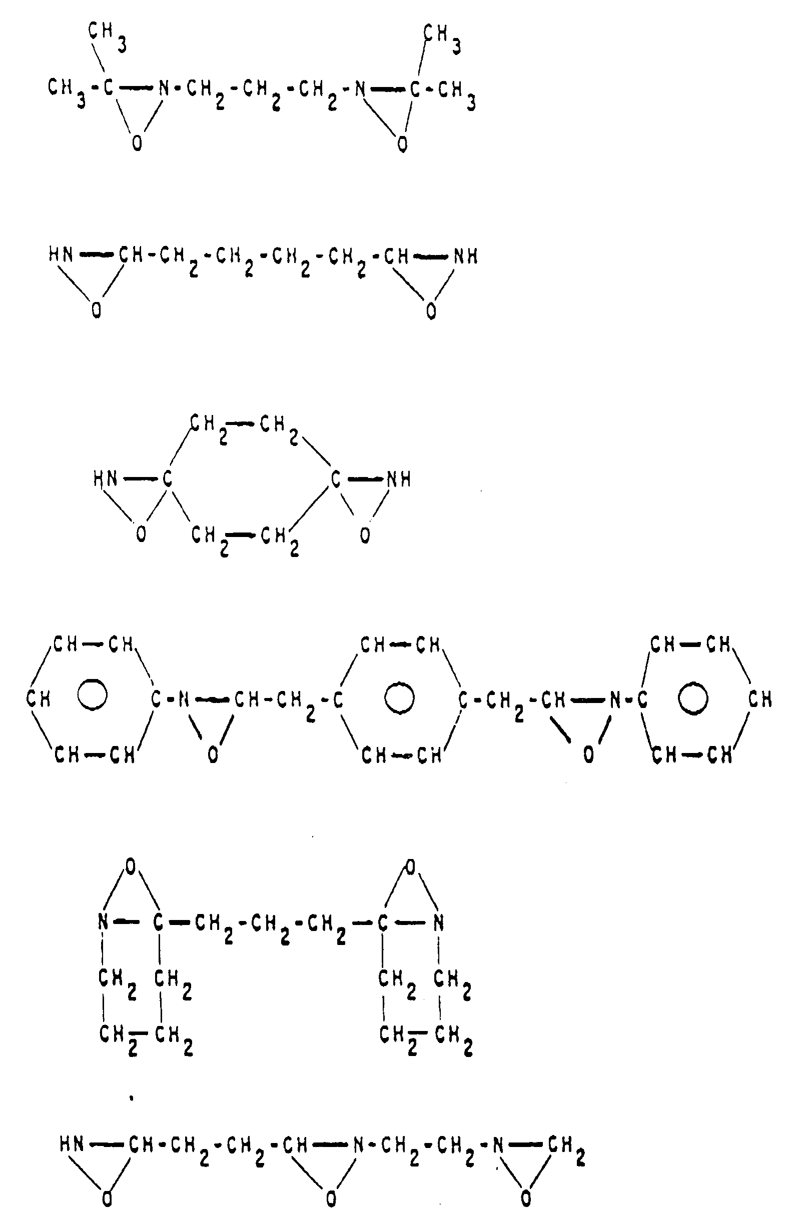

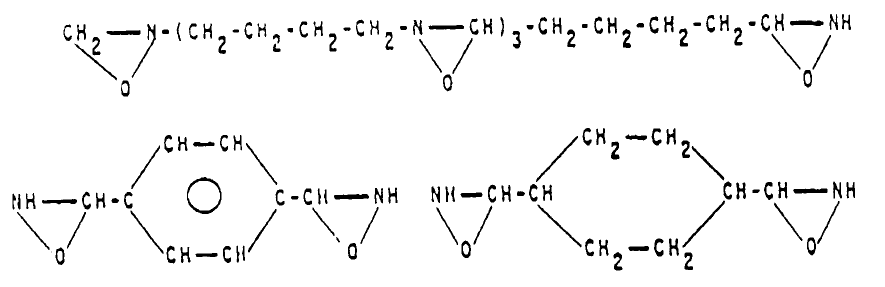

The amount of the oxaziridine used in the adhesive systems of this invention may range from 0.01 to 10% by moles with respect to the overall amount of double bonds of the vinyl monomers present.

Amounts ranging from 0.02% to 5% are preferred. Amounts higher than 10% can be used but without still further improving the characteristics of the adhesive systems of the present invention.

The oxaziridines may be used in combination with any known reducing agent or polymerization activator.

Examples of suitable reducing agents are: ferrous chloride, titanium dichloride, sodium or potassium bisulfite, ascorbic acid, acetaldehyde and other aldehydes, sulfurous acid, alkali metals sulfites, bisulfites, sulfoxylates, thiosulfates, hydrogen sulfide, hydroxylamine, hydrazine, acetone sodium bisulfite, formaldehyde sodium sulfoxylate, sulfinic acids, copper and iron salts, salts of other metals having a low valency, levulinic acid, reducing sugars such as glucose, β-mercaptoethanol, dicyandiamide, iron salts of amino acids, iron succinate, copper sulfate pentahydrate, tertiary amines.

Moreover, it has been found that mixtures of aldehyde/amine condensation products are particularly suitable as reducing agents or as polymerization activators. These mixtures of condensation products may be used as such, or partly purified in order to achieve a higher concentration of the most active components and, in both cases, a soluble salt of a transition metal may be added.

Many aldehydes and amines are suitable for preparing the aldehyde/amine condensation mixture according to per se known methods. The aldehydes are preferably of the aliphatic type and contain radicals having from 1 to 12 carbon atoms, for instance acetaldehyde, n-butyraldehyde, propionaldehyde, cyclopentanal; cyclohexanal, hydrocinnamic aldehyde, n-heptanal, n-decanal, and n-dodecanal. Any primary aliphatic or aromatic amine having up to 18 carbon atoms may be used; for instance, ethylamine, n-butylamine, n-pentylamine, cyclopentylamine, n-hexylamine, cyclohexylamine, n-octylamine, n-decylamine, n-dodecylamine, n-hexadecylamine, n-octadecylamine, aniline, toluyl amines, and xylyl amines.

The preferred mixture to be used as polymerization activator, consists of butyraldehyde/aniline condensation products available on the market under trade-mark VAMAC®808 by Du Pont Company.

The most active component of the mixture is N-phenyl-3,5-diethyl-2-propyl-1,2-dihydropyridine (DHP), present in the mixture in amounts not higher than 50% by weight.

The activator may be enriched with DHP up to 100% by fractional distillation; fractions containing DHP between 70% and 100% by weight, may be used with improved performance.

In the present invention by the term DHP, mixtures are meant containing at least 70% by weight of the above mentioned dihydropyridine derivative.

Both the aniline/butyraldehyde condensation mixture and DHP may be used as such or diluted with solvents, preferably chlorinated solvents, for instance 1,1,1-trichloroethane, methylene chloride, and the like, with varying amounts of solvent, ranging from 10 to 80% by weight.

Salts of soluble transition metals, preferably salts of cobalt, nickel, copper, manganese, iron and vanadium may be added either to the aniline/butyraldehyde condensation mixture or to DHP or to solutions thereof, in concentrations not higher than 5% by weight.

Examples of usable organic salts are: copper saccharinate, copper paratoluenesulfonate, cobalt acetylacetonate, cobalt naphthenate, vanadium acetylacetonate, iron octoate, iron naphthenate, iron lactate, iron gluconate, and iron saccharinate.

The acrylic adhesive compositions of the present invention are characterized by a more efficient redox system of radicalic polymerization which imparts to said compositions:
- a short setting time, measured as the elapsed time beyond which glued specimens cannot be separated by a shearing stress applied manually,
- a longer storage time, measured as the time during which no gelification phenomena occur upon storing the samples at room temperature.

The compositions of this invention are utilized by the conventional primer technique, which involves the application of the adhesive component on a part which has to be adhered and the application of the activating agent on the other part which has to be adhered. Moreover, they may be utilized not only at room temperature but also at higher temperatures, both in the setting step and in the working step.

The adhesive compositions of the present invention may be used on porous surfaces or on smooth surfaces, without necessarily requiring pretreatment of the surfaces on which the compositions are to be applied.

Materials which may be glued by the acrylic adhesives of the present invention are, e.g. steel, aluminum, copper, brass, polymeric materials, wood, glass, paper, and previously painted surfaces.

A few examples will be given hereinafter by way of illustration and not of limitation, in order still better to understande the present invention.

### EXAMPLE 1

16 m moles of 3,3-pentamethylene-2-cyclohexyl-oxaziridine were added to a predetermined composition consisting of: 20 g of ELAPRIM®S 3345 (butadiene-acrylonitrile copolymer traded by ENICHEM), 10 g of methacrylic acid, 63 g of cyclohexylmethacrylate, 5 g of ethyleneglycol dimethacrylate, 0.33 g of BHT, and 50 mg of FeCl₃ dissolved in 0.5 ml of methanol.

The adhesive systems were prepared by keeping the mixture under stirring at room temperature up to the complete dissolution of the polymer.

The thus-obtained adhesive systems were characterized by measuring the resistance to shearing stress, according to ASTM D 1002-72 (1983), and the setting time.

Six simply overlapped joints were prepared by using steel specimens having the following sizes 120 X 25 X 1.5 mm, merely degreased by trichloroethylene,

A film of adhesive paste, having a thickness of about 0.5 mm, was spread on a specimen and a film of polymerization activator, constituted of DHP, was spread on the other specimen, and the parts of the two specimens, intended for adhesion, were then joined.

The resistance to shearing stress was measured by making use of the apparatus MTS 810, according to ASTM D 1002-72 (1983), by keeping a cutting speed of 1 mm/min., and by carrying out the test 72 hours after gluing.

Setting time was measured by making use of the same gluing method, of the same parts intended for adhesion and of the same treatments used for the preparation of the simply overlapped joints, used for measuring the resistance to shearing stress and by measuring the shortest time necessary for not breaking the joint under a manually appled shearing stress.

The shearing stress resistance (an average of 6 tests) was 24.6 N/mm² and the setting time was 2 min.

A specimen retained at room temperature was still functioning efficiently as regards adhesiveness, and did not display gelification phenomena, after 6 months storage.

### EXAMPLE 2

By operating according to the conditions of Example 1, an adhesive composition was prepared containing 20 g of ELAPRIM® S 3345 (butadiene-acrylonitrile copolymer traded by ENICHEM), 10 g of methacrylic acid, 63 g of cyclohexylmethacrylate, 5 g of ethylene-glycol di-methacrylate, 1 g of maleic acid, 50 mg of FeCl₃, and 16 m.moles of 3,3-pentamethylene-2-cyclohexyloxaziridine.

The setting time and the shearing resistance of this adhesive composition, by adding DHP as an activator, was 1.5 min. and 21.2 N/mm², respectively.

### EXAMPLES 3-4

By operating according to the conditions of Example 1, an adhesive composition was prepared containing 20 g of ELAPRIM ® S 3345 (butadiene-acrylonitrile copolymer traded by ENICHEM ), 10 g of methacrylic acid, 63 g of cyclohexylmethacrylate, 5 g of ethyleneglycol dimethacrylate, 1 g of maleic acid, and 16 m.moles of 3,3-pentamethylene-2-cyclohexyloxaziridine.

The setting time and the shearing resistance of the above-reported adhesive composition were measured by adding as polymerization activators:
1. a methylene chloride solution containing 80 parts of DHP and 0.1 parts by weight of copper (I) saccharinate per 100 parts of solution; and
2. a toluene solution containing 80% of DHP and 0.4% of iron (II) saccharinate.

A value of the setting time equal to 9′ was obtained by solution 1.

By using solution 2, the setting time decreased to 6′ and a value of shearing resistance equal to 15 N/mm² was obtained.

## Claims

1. Bicomponent adhesive compositions comprising:
(a) an adhesive base consisting of a solution of an elastomer in one or more polymerizable vinyl monomers;
(b) a component selected from dicarboxylic acids containing from 3 to 18 carbon atoms, salts of transition metals and mixtures thereof;
(c) an oxaziridine of general formula (I): 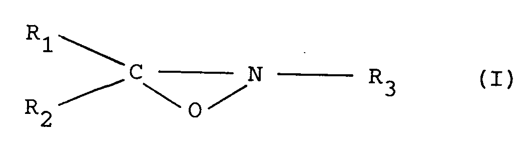 wherein each of R₁, R₂ and R₃, the same or different, represent hydrogen, a C₁-C₂₀ hydrocarbon radical selected from alkyl, iso-alkyl, alkenyl, alkylene, cyclo-alkyl, cyclo-alkylene, arylene, aryl, alkyl-aryl, alkyl-arylene, aryl-alkyl, aryl-alkylene, alkyl-cycloalkyl, and alkyl-cycloalkylene radicals, or R₁ and R₂ and R₁ or R₂ and R₃ may be taken together to form either a cycloalkyl ring or a heterocyclic ring containing the N-atom as hetero-atom, or two radicals R₃ and two or four radicals R₁ and R₂ together may form a polyoxaziridine; and
(d) an organic or inorganic reducing agent as polymerisation activator.

2. Compositions according to claim 1, wherein the oxaziridine of formula (I) is present in amounts ranging from 0.01 to 10% by moles with respect to the overall amount of double bonds of the vinyl monomers.

3. Compositions according to claim 1 or 2, wherein the oxaziridine of formula (I) has from 1 to 5 oxaziridine rings.

4. Compositions according to any one of claims 1 to 3, wherein the ratio of polymerizable vinyl monomer to elastomer in component (a) is between 100 and 2000 parts by weight of monomer per 100 parts by weight of elastomer, and preferably between 100 and 500 parts by weight of monomer per 100 parts by weight of elastomer.

5. Compositions according to any one of claims 1 to 4, wherein the vinyl monomer is an acrylic monomer and the elastomer is a butadiene/acrylonitrile copolymer.

6. Compositions according to any one of claims 1 to 5, wherein the dicarboxylic acid is capable of coordinating the metal ions.

7. Compositions according to claim 6, wherein the dicarboxylic acid is selected from maleic acid, malic acid, salicyclic acid, itaconic acid, phthalic acid and mixtures thereof.

8. Compositions according to any one of claims 1 to 7, wherein the dicarboxylic acid is used in amounts between 0.5 and 10 parts by weight per 100 parts by weight of solution.

9. Compositions according to any one of claims 1 to 8, wherein the salt of a transition metal contains iron, copper, cobalt, nickel, manganese or vanadium in an oxidized valence state.

10. Compositions according to claim 9, wherein the salt of a transition metal is ferric chloride.

11. Compositions according to claim 9 or claim 10, wherein the salt of a transition metal is present in an amount of equal to or lower that 0.5 parts by weight per 100 parts by weight of solution.

12. Compositions according to any one of claims 1 to 11, wherein the reducing agent is a mixture of aldehyde/ amine condensation products.

13. Compositions according to claim 12, wherein the aldehyde/ amine condensation product mixture consists of butyraldehyde/aniline condensation products, the most active component of said butyraldehyde/aniline condensation product mixture preferably being N-phenyl-3,5-diethyl-2-propyl-1,2-dihydropyridine (DHP) having a purity higher than 70% by weight.

14. Compositions according to claim 13, wherein the butyraldehyde/aniline condensation products or DHP are diluted with a solvent such as methylene chloride or toluene, the amount of solvent ranging from 10 to 80% by weight.

15. Compositions according to claims 13 or 14, wherein a soluble salt of a transition metal is added in concentrations not higher than 5% by weight with respect to the butyraldehyde/aniline condensation products or with respect to the DHP.

16. Compositions according to claim 15, wherein the transition metal is selected from cobalt, nickel, copper, manganese, iron and vanadium.

17. Compositions according to claim 15, wherein the soluble salt of a transition metal is copper (I) or (II) saccharinate or iron (II) or (III) saccharinate.

## Patentansprüche

1. Zweikomponenten-Klebstoffzusammensetzungen, welche umfassen:
(a) eine Klebstoffgrundlage, die aus einer Lösung eines Elastomeren in einem oder mehreren polymerisierbaren Vinylmonomeren besteht;
(b) eine aus Dicarbonsäuren, die 3 bis 18 Kohlenstoffatome enthalten, Salzen von Übergangsmetallen und Mischungen davon ausgewählte Komponente;
(c) ein Oxaziridin der allgemeinen Formel (I): 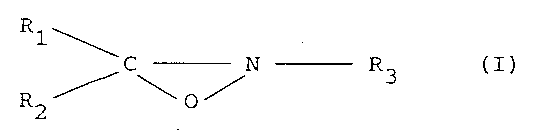 worin R₁, R₂ und R₃, gleich oder verschieden, jeweils für Wasserstoff, einen aus Alkyl-, iso-Alkyl-, Alkenyl-, Alkylen-, Cycloalkyl-, Cycloalkylen-, Arylen-, Aryl-, Alkylaryl-, Alkylarylen-, Arylalkyl-, Arylalkylen-, Alkylcycloalkyl- und Alkylcycloalkylenresten ausgewählten C₁-C₂₀ Kohlenwasserstoffrest stehen oder R₁ und R₂ und R₁ oder R₂ und R₃ zusammengenommen werden können, um entweder einen Cycloalkylring oder einen das N-Atom als Heteroatom enthaltenden heterocyclischen Ring zu bilden, oder zwei Reste R₃ und zwei oder vier Reste R₁ und R₂ zusammen ein Polyoxaziridin bilden können; und
(d) ein organisches oder anorganisches Reduktionsmittel als Polymerisationsaktivator.

2. Zusammensetzungen nach Anspruch 1, worin das Oxaziridin der Formel (I) in Mengen, die im Bereich von 0,01 bis 10 Mol-%, bezogen auf die Gesamtmenge an Doppelbindungen der Vinylmonomeren, liegen, anwesend ist.

3. Zusammensetzungen nach Anspruch 1 oder 2, worin das Oxaziridin der Formel (I) 1 bis 5 Oxaziridinringe aufweist.

4. Zusammensetzungen nach irgendeinem der Ansprüche 1 bis 3, worin das Verhältnis von polymerisierbarem Vinylmonomer zu Elastomer in Komponente (a) zwischen 100 und 2000 Gew.-Teilen Monomer pro 100 Gew.-Teile Elastomer und vorzugsweise zwischen 100 und 500 Gew.-Teilen Monomer pro 100 Gew.-Teile Elastomer liegt.

5. Zusammensetzungen nach irgendeinem der Ansprüche 1 bis 4, worin das Vinylmonomere ein Acrylmonomer und das Elastomere ein Butadien/Acrylnitril-Copolymer ist.

6. Zusammensetzungen nach irgendeinem der Ansprüche 1 bis 5, worin die Dicarbonsäure Metallionen koordinieren kann.

7. Zusammensetzungen nach Anspruch 6, worin die Dicarbonsäure ausgewählt ist aus Maleinsäure, Äpfelsäure, Salicylsäure, Itaconsäure, Phthalsäure und Mischungen davon.

8. Zusammensetzungen nach irgendeinem der Ansprüche 1 bis 7, wohin die Dicarbonsäure in Mengen zwischen 0,5 und 10 Gew.-Teilen pro 100 Gew.-Teile Lösung eingesetzt wird.

9. Zusammensetzungen nach irgendeinem der Ansprüche 1 bis 8, worin das Salz eines Übergangsmetalls Eisen, Kupfer, Kobalt, Nickel, Mangan oder Vanadium in einem oxidierten Valenzzustand enthält.

10. Zusammensetzungen nach Anspruch 9, worin das Salz eines Übergangsmetalls Eisen(III)chlorid ist.

11. Zusammensetzungen nach Anspruch 9 oder Anspruch 10, worin das Salz eines Übergangsmetalls in einer Menge von gleich oder unter 0,5 Gew.-Teilen pro 100 Gew.-Teile Lösung anwesend ist.

12. Zusammensetzungen nach irgendeinem der Ansprüche 1 bis 11, worin das Reduktionsmittel eine Mischung von Aldehyd/Amin-Kondensationsprodukten ist.

13. Zusammensetzungen nach Anspruch 12, worin die Aldehyd/ Amin-Kondensationsproduktmischung aus Butyraldehyd/Anilin-Kondensationsprodukten besteht, wobei die aktivste Komponente dieser Butyraldehyd/Anilin-Kondensationsproduktmischung vorzugsweise N-Phenyl-3,5-diethyl-2-propyl-1,2-dihydropyridin (DHP) mit einer Reinheit von mehr als 70 Gew.-% ist.

14. Zusammensetzungen nach Anspruch 13, worin die Butyraldehyd/Anilin-Kondensationsprodukte oder DHP mit einem Lösungsmittel wie Methylenchlorid oder Toluol verdünnt sind, wobei die Menge an Lösungsmittel im Bereich von 10 bis 80 Gew.-% liegt.

15. Zusammensetzungen nach den Ansprüchen 13 oder 14, worin ein lösliches Salz eines Übergangsmetalls in Konzentrationen nicht über 5 Gew.-%, bezogen auf die Butyraldehyd/Anilin-Kondensationsprodukte oder bezogen auf DHP, zugesetzt ist.

16. Zusammensetzungen nach Anspruch 15, worin das Übergangsmetall ausgewählt ist aus Kobalt, Nickel, Kupfer, Mangan, Eisen und Vanadium.

17. Zusammensetzungen nach Anspruch 15, worin das lösliche Salz eines Übergangsmetalls Kupfer(I)- oder -(II)saccharinat oder Eisen(II)- oder -(III)saccharinat ist.

## Revendications

1. Composition adhésive à deux composants comprenant:
(a) une base adhésive consistant en une solution d'un élastomère dans un ou plusieurs monomères vinyliques polymérisables;
(b) un composant choisi parmi les acides dicarboxyliques ayant de 3 à 18 atomes de carbone, les sels des métaux de transition et leurs mélanges;
(c) une oxaziridine de formule générale (I): 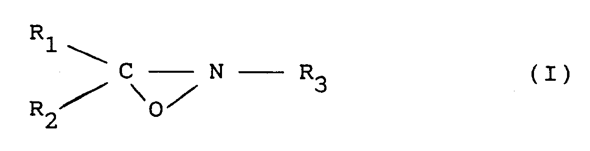 dans laquelle:
chacun des radicaux R₁, R₂ et R₃, qui peuvent être identiques ou différents, représentent un atome d'hydrogène, un radical hydrocarboné ayant de 1 à 20 atomes de carbone et choisi parmi les radicaux alkyle, isoalkyle, alkényle, alkylène, cycloalkyle, cycloalkylène, arylène, aryle, alkylaryle, alkylarylène, arylalkyle, arylalkylène, alkylcycloalkyle et alkylcycloalkylène; ou R₁ et R₁, et R₁ ou R₂ et R₃ peuvent être réunis pour former un noyau cycloalkyle ou un noyau hétérocyclique contenant un atome d'azote en tant qu'hétéroatome, ou encore deux radicaux R₃ et deux ou quatre radicaux R₁ et R₂ peuvent former ensemble une polyoxaziridine;
et
(d) un agent réducteur organique ou minéral servant d'activateur de polymérisation.

2. Compositions selon la revendication 1, dans lesquelles l'oxaziridine de formule (I) est présente en des quantités de 0,01 à 10% en moles, par rapport à la quantité totale de doubles liaisons des monomères vinyliques.

3. Compositions selon la revendication 1 ou 2, dans lesquelles l'oxaziridine de formule (I) possède de 1 à 5 noyaux oxaziridine.

4. Compositions selon l'une quelconque des revendications 1 à 3, dans lesquelles la proportion monomère vinylique polymérisable/élastomère dans le composant A est de 100 à 2 000 parties en poids de monomère par 100 parties en poids d'élastomère et de préférence de 100 à 500 parties en poids de monomère par 100 parties en poids d'élastomère.

5. Compositions selon l'une quelconque des revendications 1 à 4, dans lesquelles le monomère vinylique est un monomère acrylique, et l'élastomère est un copolymère butadiène/acrylonitrile.

6. Composition selon l'une quelconque des revendications 1 à 5, dans lesquelles l'acide dicarboxylique est capable de coordonner les ions métalliques.

7. Compositions selon la revendication 6, dans lesquelles l'acide dicarboxylique est choisi parmi l'acide maléique, l'acide malique, l'acide salicylique, l'acide itaconique, l'acide phtalique et leurs mélanges.

8. Compositions selon l'une quelconque des revendications 1 à 7, dans lesquelles l'acide dicarboxylique est utilisé en des quantités de 0,5 à 10 parties en poids par 100 parties en poids de solution.

9. Compositions selon l'une quelconque des revendications 1 à 8, dans lesquelles le sel d'un métal de transition contient du fer, du cuivre, du cobalt, du nickel, du manganèse ou du vanadium dans un état de valence oxydé.

10. Compositions selon la revendication 9, dans lesquelles le sel d'un métal de transition est le chlorure ferrique.

11. Compositions selon la revendication 9 ou la revendication 10, dans lesquelles le sel d'un métal de transition est présent en une quantité inférieure ou égale à 0,5 parties en poids par 100 parties en poids de solution.

12. Compositions selon l'une quelconque des revendications 1 à 11, dans lesquelles l'agent réducteur est un mélange de produits de condensation aldéhyde/amine.

13. Compositions selon la revendication 12, dans lesquelles le mélange de produits de condensation aldéhyde/amine est constitué de produits de condensation butyraldéhyde/aniline, le composant le plus actif dudit mélange de produits de condensation butyraldéhyde/aniline étant de préférence la N-phényl-3,5-diéthyl-2-propyl-1,2-dihydropyridine (DHP) ayant une pureté supérieure à 70% en poids.

14. Compositions selon la revendication 13, dans lesquelles les produits de condensation butyraldéhyde/aniline ou le DHP sont dilués avec un solvant tel que le chlorure de méthylène ou le toluène, la quantité de solvant étant comprise entre 10 et 80% en poids.

15. Compositions selon les revendications 13 ou 14, dans lesquelles on ajoute un sel soluble d'un métal de transition, à une concentration non supérieure à 5% en poids par rapport au produit de condensation butyraldéhyde/aniline ou au DHP.

16. Compositions selon la revendication 15, dans lesquelles le métal de transition est choisi parmi le cobalt, le nickel, le cuivre, le manganèse, le fer et le vanadium.

17. Compositions selon la revendication 15, dans lesquelles le sel soluble d'un métal de transition est le saccharinate de cuivre (I) ou (II) ou le saccharinate de fer (II) ou (III).
